# EUROPEAN PATENT APPLICATION

(11) **EP 4 230 941 A1**
(43) Date of publication of application: **23.08.2023**
(21) Application number: 22157957.6
(22) Date of filing: 22.02.2022
(51) Int. Cl.: F28D 1/03, F28F 13/14, F28F 3/12, F28F 3/02

(54) **A HEAT EXCHANGING ELEMENT**

(71) Applicant: Tabet Benslimane, Hassan, 9240 Zele (BE)
(72) Inventor: Tabet Benslimane, Hassan, 9240 Zele (BE)
(74) Representative: IP HILLS NV

(57) **Abstract**

A heat exchanging element which comprises a first and a second textile layer. The textile layers are spaced one from the other, the outer side of the first textile layer being coated with a first liquid-tight polymeric coating. This first liquid-tight polymeric coating comprises thermally conductive particles.

## Description

### Field of the Invention

The present invention generally relates to heat exchanging elements and uses of such heat exchanging elements.

### Background of the Invention

Heat exchanging elements are known in the art. As an example the heat exchanging elements of a central heating system usually are metal radiators comprising water as heat exchanging fluid. This water is circulated from a heat source to the radiators and back to the heat source, optionally via a buffer tank. Disadvantage of these radiators is the inflexibility to provide radiators with dimensions adapted to the mounting space available in the building. Also, seen the material used, the dimensions are limited in order to provide radiators which can be handled during mounting.

A heat exchanger element having more flexibility in dimensions is described in US4230175. The heat exchanger element comprises a double textile fabric having two textile layers being connected at their inner side by means of monofilaments. The outer side of both textile layers are coated with a PVC coating. Such heat exchanger elements suffer from a low heat release per surface area unit of the surface of the heat exchanger element.

### Summary of the Invention

It is the object of the present invention to provide heat exchanging elements solving problems of the heat exchanging elements as known in the art. It is the object of the present invention to provide heat exchanging elements which have an increased thermal performance. These heat exchanging elements are preferably adapted to be mounted on non-planar surfaces. It is the object of the present invention to provide heat exchanging elements which have a more uniform heat distribution over the surface of the heat exchanging element. It is the object of the present invention to provide heat exchanging elements which are bendable, or even flexible.

According to a first aspect of the invention, a heat exchanging element is provided, the heat exchanging element comprising a first and a second textile layer, the textile layers being spaced one from the other. The outer side of the first textile layer is coated with a first liquid-tight polymeric coating, this first liquid-tight polymeric coating comprises thermally conductive particles.

The outer side of the polymeric coating is the side of the coating not in contact with the first or second textile layer. The first and second textile layer each have an outer and an inner side. The inner sides of the two textile layers face each other and are spaced one from the other.

Between the two textile layers, a space or volume is provided, which space or volume is adapted to receive and allow to pass heat exchanging fluid, like heat exchanging liquid between the two textile layers.

Preferably the outer side of the first liquid-tight polymeric coating is uneven or profiled, i.e. the specific surface per surface area unit of the outer side of the first liquid-tight polymeric coating is more than 1 m²/m², such as more than 1,01 m²/m².

According to some embodiments, the textile layers may be spaced at their inner side from each other by at least one spacing element, this at least one or these spacing elements creating the space between the textile layers. According to some embodiments, the textile layers may be spaced at their inner side from each other by a plurality, i.e. more than one, spacing elements, these spacing elements creating the space between the textile layers. The spacing element or spacing elements may be connected to one or to both the inner sides of the textile layers. When the spacing element or spacing elements are connected to both the inner sides of the textile layers, they are referred to as binding elements, binding or connecting the two textile layers one to the other via the layers inner sides. The one or the plurality of spacing elements delimit the space between the textile layers.

Thermally conductivity is expressed in Watts per meter-Kelvin (W/mK), measured at 25°C. In the context of this is invention, a material is thermally conductive when the material has a thermal conductivity of equal or more than 10 W/mK. More preferred, particles having a thermal conductivity of equal or more than 11 W/mK, such as equal or more than 15 W/mK. Materials which are not thermally conductive, are thermally insulating.

In case the thermal conductivity of a textile surface is measured or indicated, this thermally conductivity of this textile surface is expressed in Watts per square meter-Kelvin (W/m²K), measured at 25°C.

Preferably the fluid-tight polymeric coating or coatings are fluid-tight polymeric coating.

Possibly the second textile layer is coated with a second liquid-tight polymeric coating, which second liquid-tight polymeric coating comprises thermally conductive particles. Preferably the outer side of the second liquid-tight polymeric coating is uneven or profiled, i.e. the specific surface per surface area unit of the outer side of the first liquid-tight polymeric coating is more than 1 m²/m², such as more than 1,01 m²/m².

The space between the textile layers is adapted to allow heat exchanging medium of the heat exchanging element to flow between the two textile layers. As such, thermal energy may be exchanged from the heat exchanging medium to the surrounding space of the heat exchanging element, and this via the inner side of the first and/or second textile layer, through this textile layer and the first polymeric coating, and via the outer side of the first and/or second liquid-tight polymeric coating. The heat exchanging element in this setting is used as heating element. It is understood that thermal energy may be exchanged from the surrounding space of the heat exchanging element to the heat exchanging medium. In this case, the heat exchanging medium is a cooling fluid, e.g. a cooling liquid, and the heat exchanging element is used as cooling element.

The presence of the thermally conductive particles, preferably in combination with an uneven, e.g. profiled outer side of the first and possibly the second liquid-tight polymeric coating, surprisingly increases very significantly the amount of thermal energy exchanged between inner and outer side of the heat exchanging element per area unit of the outer side of the heat exchanging element provided by the first and possibly the second liquid-tight polymeric coating. An uneven, e.g. profiled outer side of the first and possibly of the second liquid-tight polymeric coating causes the specific surface of this outer side per surface area unit, being the contact surface between this outer side and the surrounding volume of the heat exchanging element, to be increased and larger than 1 m²/m², e.g. equal or larger than 1,01 m²/m². A surface area unit of the outer side of the heat exchanging element is measured by perpendicularly projecting the outer side of the heat exchanging element on a plane parallel to the textile layer closest to this outer side.

According to some embodiments, the outer surface of the first liquid-tight polymeric coating is uneven, or profiled, the specific surface per surface area unit of the outer side of the first liquid-tight polymeric coating being more than 1 m²/m².

The specific surface per surface area unit of the outer side of the first liquid-tight polymeric coating may be more than or equal to 1,01 m²/m², even more than or equal to 1,02 m²/m² or more than or equal to 1,03 m²/m². The specific surface per surface area unit of the outer side of the first liquid-tight polymeric coating may be more than or equal to 1,04 m²/m², even more than or equal to 1,05 m²/m² or more than or equal to 1,075 m²/m². The specific surface per surface area unit of the outer side of the first liquid-tight polymeric coating may be up to and including 10 m²/m², such as up to and including 3 m²/m²

The specific surface per area unit of the outer side of the first and possibly also the second liquid-tight polymeric coating may be more than 1 m²/m² up to and including 10 m²/m², or up to and including 3 m²/m². More preferred, the specific surface per surface area unit of the outer side of the first and possibly the second liquid-tight polymeric coating is in the range of 1.01 m²/m² to 2 m²/m², e.g. in the range of 1.01 to 1.5 m²/m². This ratio is obtained by providing an uneven, e.g. undulated or profiled outer surface.

The profile may be composed of protrusions, such as blobs, a plurality of parallel or mutually crossing ribs, projecting pillars or studs and alike. The height of the protrusions is preferably limited to the range of 10µm to 1000mm, such as in the range of 10µm to 500mm, even in the rage of 10µm to 50mm or in the range of 10µm to 1000µm, such as in the range of 40µm to 400µm, e.g. of about 150 to 170µm. This height of a protrusion is the distance in a direction perpendicular to the textile layer closest to this outer side, and measured between the highest point of the protrusion, and the lowest point of the recess encompassing this protrusion.

According to some embodiments, the amount of thermally conductive particles in the first liquid-tight polymeric coating may be in the range of 1 %w to 40 %w of the coating.

The amount of thermally conductive particles in the coating being 1%w of the coating means that for each 100 gram of coating, 10 gram is provided by the thermally conductive particles. The amount of thermally conductive particles in the first and possibly also the second liquid-tight polymeric coating may be in the range of 5%w to 30%w of the coating. More preferred, the amount of thermally conductive particles in the first and possibly also the second liquid-tight polymeric coating may be in the range of 7,5%w to 15%w of the coating, e.g. about 10 %w.

According to some embodiments, the thermally conductive particles in the first liquid-tight polymeric coating may be carbon particles, metal particles or a combination of carbon particles and metal particles.

The thermally conductive particles in the first and optionally in the second liquid-tight polymeric coating may be carbon particles, metal particles or a combination of carbon particles and metal particles.

Preferably the particles may be chosen from the group consisting of fibers, powder, and granular materials, spheres or even discs of material. As an example, small discs of aluminium material may be used, having a thickness in the range of one to a few µm, like 5µm, and an average diameter in the range of 25 to 75µm, small discs of aluminium material with particles having a diameter distribution in the range of e.g. 10 to 100µm.

The particles may be metal particles such as iron particles, steel or stainless steel particles, copper, brass or bronze particles, aluminium particles, silver particles or gold particles and alike, particles from alloys of such metals, or mixtures thereof.

According to some embodiments, the thickness of the first liquid-tight polymeric coating may be in the range of 20 to 3000µm.

The thickness of the first and optionally the second liquid-tight polymeric coating may be in the range of 50 to 3000 µm, more preferred in the range of 100 to 1000 µm. The thickness of the polymeric coating is the maximum distance between the outer point of the uneven surface of the polymeric coating, such as the tops of the protrusions provided on the side of the polymeric coating, and the outer side of the textile layer to which the coating is provided.

According to some embodiments, the first liquid-tight polymeric coating further comprises a polymeric matrix which may be a polyvinylchloride matrix.

The first and optionally also the second liquid-tight polymeric coating further comprises a polymeric matrix which preferably is a polyvinylchloride (PVC) matrix, as this matrix appears to be most resistant to water or other liquid heat exchanging fluids, which may contact the matrix via the pores of the textile layer. These pores are closed by the matrix, providing a liquid-, even fluid-tight coating. Other suitable polymeric matrices are a polyurethane (PUR) matrix, a polyurea (PU) matrix, a polyester (PES) matrix, such as a polyethylene terephthalate (PET) matrix, or a polyamide (PA) matrix.

According to some embodiments, the second textile layer may be coated with a second liquid-tight polymeric coating, said second liquid-tight polymeric coating comprises thermally conductive particles. The type of thermally conductive particles in this second coating layer are the same as the ones which may be used for the first coating layer. The amount of thermally conductive particles in this second coating layer may be in the same range as the ranges which may be used for the first coating layer. The thermally conductive particles of this second liquid tight polymeric coating, and the amount used, may be analogue, similar or even identical to the one of the first liquid tight polymeric coating.

The outer side or surface of the second liquid-tight polymeric coating may be uneven, i.e. profiled. The specific surface per surface area unit of this second liquid tight polymeric coating may be in the same ranges as the one of the first liquid tight polymeric coating. The specific surface per surface area unit of this second liquid tight polymeric coating may be analogue, similar or even identical to the one of the first liquid tight polymeric coating.

The first and optionally also the second liquid-tight polymeric coating may be provided to the textile layer by direct coating or transfer coating. The profile may be provided by engraving or by transfer of a profiled layer during the transfer coating.

By varying the type and/or amount of thermally conductive particles and/or by using a different profiled surface for the two outer sides of said liquid tight polymeric coatings, the heat exchanging element may direct and/or limit its conduction of the thermal energy differently to the two sides of the heat exchanging element. Similarly, by using a varying profile or varying type or amount of thermally conductive particles locally on the outer side of the liquid tight polymeric coating, the heat exchanging element may direct and/or limit its conduction of the thermal energy differently locally over the surface of this outer side of the heat exchanging element.

According to some embodiments, the first and second liquid-tight polymeric coatings may be similar or even identical.

According to some embodiments, the second textile layer may be coated with a thermally insulating material.

The second textile layer is coated with a second liquid-tight polymeric coating, which second liquid-tight polymeric coating is thermally insulating. The second textile layer may be coupled to a thermally insulating plate, preferably a rigid plate.

As such the heat exchanging element may direct and limit its conduction of the thermal energy to one of the two sides of the heat exchanging element. The second textile layer may be coupled to a thermally insulating plate may provide a self-supporting heat exchanging element. The second textile layer can be coupled to the plate, e.g. a polymeric plate, by thermal welding or any suitable adhesive.

The thermally insulating coating or plate may be partially or completely provided from polyvinylchloride (PVC), polyester (PES), such as a polyethylene terephthalate (PET) matrix, polyurethane (PUR) or polyurea (PU) or a polyamide (PA). The thermally insulating coating or plate may be a composite material comprising this polymeric material as polymeric matrix, and reinforcing elements such as fibers, e.g. glass fibers.

According to some embodiments, each of the first and second textile layer may be a woven, braided, knitted or nonwoven textile layer. The two textile layers may be identical, similar or mutually different.

The two textile layers may be provided from polymeric or glass fibers or filaments. Polymeric filaments or fibers may be PES filaments or fibers, such as PET filaments or fibers or PA filaments or fibers. The fineness of the filaments or fibers may preferably range of 10 to 5000 dtex, such as 50 to 500 dtex. Fibers and filaments may be crimped fibers.

A fiber, also referred to as staple fiber, is a flexible elongated object having a given finite length as known in the art. Filaments are, as known in the art, flexible elongated objects having a substantially indefinite length. Preferably the flexible binding elements are provided from yarns comprising a plurality of filaments, i.e. a plurality of flexible elongated objects having a substantially indefinite length.

The two textile layers may each be provided from spun yarns or filament yarns. The fineness of the yarns may preferably be in the range of 10 to 5000 dtex, such as 50 to 500 dtex.

According to some embodiments, one or both of the two textile layers may be provided from multifilament yarns. Alternatively, one or both of the two textile layers may be provided from may be spun staple fiber yarns.

Multifilament yarns are preferred over spun yarns, as in multifilament yarns, the filaments have less to no tendency to leave the yarn during use. Multifilament yarns typically comprises more than 2 filaments per radial section such as 10 or more per radial section, e.g. 15 or more, or even 20 or more filaments per radial section. The multifilament yarns may be twisted single yarns, or twined (or plied) yarns, comprising 2, 3 or more single yarns being twisted (or plied) to each other.

Possibly, one or both the textile layers may comprise thermally conductive fibers or filaments, such as carbon fibers or filaments, or metal fibres or filaments. This may increase the heat transfer from the textile layer to the liquid-tight polymeric coating.

According to some embodiments, the textile layers each may have a surface weight in the range of 5 to 500 g/m², such as in the range of 50 to 150 g/m². The heat exchanging element provided as such may have on the one hand a good drapability and flexibility, while on the other hand it is found not too heavy to handle.

Hence according to some embodiments, the first and second textile layer may be woven layers, each layer comprising weft yarns and a warp yarns. The total number of weft yarns per length unit in warp direction may preferably range between 100 and 2000 yarns per meter, such as between 500 and 1500 yarns per meter, e.g. about 1000 yarns per meter. The total number of warp yarns per length unit in weft direction may preferably range between 100 and 2000 yarns per meter, such as between 500 and 1500 yarns per meter, e.g. about 1000 yarns per meter. Such weave density has as an advantage that again the heat exchanging element comprising the textile layers are flexible and drapable, while not being too heavy to handle.

Preferably the weft yarns are filament yarns, possibly mono- or multifilament yarns. The weft yarns may be multifilament yarns typically comprising more than 2 filaments per radial section such as 10 or more per radial section, e.g. 15 or more, or even 20 or more filaments per radial section. The multifilament yarns may be twisted single yarns, or twined (or plied) yarns, comprising 2, 3 or more single yarns being twisted (or plied) to each other. The use of such multifilament weft yarns has the advantage that it provides a textile layers with good drapeability The use of multifilament yarns also improves the strength of textile layers.

Preferably the warp yarns used to bind in the weft yarns, may be multifilament or spun staple fiber yarns. The yarns may be twisted single yarns, or twined (or plied) yarns, comprising 2, 3 or more single yarns being twisted (or plied) to each other. The use of such warp yarns has the advantage that it provides textile layers with good drapeability. The use of multifilament yarns also improves the strength of the textile layer as compared to the textile layers provided using spun yarns.

According to some embodiments, the distance between the two textile layers may be in the range of 4 to 300 mm.

More preferred, the distance between the two textile layers is in the range of 10 to 150 mm, e.g. in the range of 50 to 125 mm. This distance is equal to the length of the spacing elements between the two textile layers.

The provision of the spacing elements, and in particularly a plurality of spacing elements per surface area unit, cause the heat exchanging medium to flow between the textile layers quite turbulently. As such, it is believed that this causes the significantly more uniform heating of the surface of the outer sides of the possibly uneven polymeric coatings comprising thermally conductive particles.

According to some embodiments, the one or more spacing, optionally binding elements may be rigid spacing element. Alternatively, according to some embodiments, the one or more spacing, optionally binding elements may be flexible spacing element. Optionally, according to some embodiments, the one or more spacing, optionally binding elements may be elastic spacing element.

A flexible element is to be understood as an element which can bend rather than break. A flexible element with a length of 1m extending beyond holding point, will bend under gravity downwards at its end point over a distance more than 1% of the extending length, i.e. more than 1cm. Elements which do not meet this criterion, are not-flexible, also referred to as rigid.

The spacing element or elements may preferably be polymeric spacing elements. The rigid spacing elements may be e.g. thermohardening polymer elements. The flexible spacing elements may be e.g. thermoplastic polymer elements. These spacing elements may be ribs, tubes, blobs, beads, cubes or any similar volumes provided between the two textile layers. The spacing element or elements may be connected to one of the inner sides of the two textile layers. In case more than one spacing element is provided, some of the spacing elements may be connected to the inner side of one of the two textile layers, the other or others being connected to the inner side of the other of the two textile layers. The spacing element or elements may be connected to both the inner sides of the two textile layers, thereby being binding elements. Hence they may be rigid or flexible binding elements. The connection may be obtained by applying glue, like a thermal glue, between the surface of the binding or spacing element or elements and one or both the inner sides of the two textile layers. alternatively, when the elements are polymeric elements, the connection may be obtained by the adhesion of the polymeric material of the polymeric element to the inner side or sides of one or both the two textile layers.

According to some embodiments, the textile layers may be part of a double textile fabric, the textile layers are connected at their inner side to each other by flexible binding elements creating the space between the textile layers. The flexible binding elements are part of the double textile fabric, usually binding warp yarns or filaments.

So according to important embodiment of the invention, a heat exchanging element may be provided, the heat exchanging element comprising a double textile fabric having a first and a second textile layer, which textile layers are connected at their inner side to each other by means of flexible binding elements creating a space between the textile layers, the outer side of the first textile layer being coated with a first liquid-tight polymeric coating. The first liquid-tight polymeric coating comprises thermally conductive particles. The space, or volume, can be occupied by a heat exchanging fluid, preferably a heat exchanging liquid, and is adapted to receive and allow to pass heat exchanging fluid, like heat exchanging liquid between the two textile layers.

Most preferred, a heat exchanging element is provided, which comprises a double textile fabric having a first and a second textile layer, which textile layers are connected at their inner side to each other by means of flexible binding elements and creating a space between the textile layers, the outer side of the first textile layer being coated with a first liquid-tight polymeric coating, and for which the first liquid-tight polymeric coating comprises thermally conductive particles, the outer side of the first liquid-tight polymeric coating being uneven, i.e. the specific surface per surface area unit of the outer side of the first liquid-tight polymeric coating is in the range of more than 1 m²/m².

The two textile layers and the flexible binding elements may be provided from polymeric or glass fibers or filaments. Polymeric filaments or fibers may be PES filaments or fibers, such as PET filaments or fibers or PA filaments or fibers. The fineness of the filaments or fibers may preferably range of 10 to 5000 dtex, such as 50 to 500 dtex. Fibers and filaments may be crimped fibers, in particularly for the filaments and fibers used in the flexible binding elements.

A fiber, also referred to as staple fiber, is a flexible elongated object having a given finite length as known in the art. Filaments are flexible elongated objects having a substantially indefinite length as known in the art. Preferably the flexible binding elements are provided from yarns comprising a plurality of filaments, i.e. a plurality of flexible elongated objects having a substantially indefinite length.

The two textile layers and the flexible binding elements may each be provided from spun yarns or filament yarns. preferably the flexible binding elements are multifilament yarns. The fineness of the yarns may preferably be in the range of 10 to 5000 dtex, such as 50 to 500 dtex.

According to some embodiments, the flexible binding elements may be multifilament yarns or monofilaments. Alternatively the flexible binding elements may be spun staple fiber yarns.

The use of such multifilament yarns, being a yarn comprising more than one filament per radial section, for the flexible binding elements, seems to cause an increase in the turbulences of the heat exchanging medium flowing through the space between the two textile layers, in which space the flexible binding elements are present. This in comparison to the use of single filaments. Filament yarns are preferred over spun yarns, as in multifilament yarns, the filaments have less to no tendency to leave the yarn during use. This is in particularly the case for the flexible binding elements. Multifilament yarns typically comprises more than 2 filaments per radial section such as 10 or more per radial section, e.g. 15 or more, or even 20 or more filaments per radial section. The multifilament yarns may be twisted single yarns, or twined (or plied) yarns, comprising 2, 3 or more single yarns being twisted (or plied) to each other.

Possibly, the flexible binding elements may comprise thermally conductive fibers or filaments, such as carbon fibers or filaments, or metal fibres or filaments, which may increase the heat transfer from the heat exchanging fluid to the one or to both the textile layers.

According to some embodiments, the double textile fabric may have a surface weight in the range of 10 to 1000 g/m², such as in the range of 100 to 300 g/m². Double textile fabrics with such specific weight have the advantage that the heat exchanging element provided has on the one hand a good drapability and flexibility, while on the other hand it is found not too heavy to handle.

According to some embodiments, the flexible binding elements provide between 0,02 and 15 % of the surface weight of the double textile fabric. The flexible binding elements may provide between 0,05 to 10 % of the surface weight, such as 0,1 to 2 % of the surface weight.

According to some embodiments, the double textile fabric may be a woven, knitted, braided or nonwoven double textile fabric.

According to some embodiments, the double textile fabric may be a double woven textile fabric.

Such double woven fabrics comprise three sets of warp yarns. The first set of warp yarns are woven into a first textile layer by means of a first set of weft yarns. The second set of warp yarns are woven into a second textile layer by means of a second set of weft yarns. Hence the first and second textile layer are woven layers. The first and second textile layer are woven on the same loom one above the other. The third set of warp yarns are bonded in both the first and second textile layer, and bridge the distance between the first and second textile layer according to the binding structure being used. This third set of warp yarns are the flexible binding elements, hereafter also referred to as bridging element. Possibly a V-construction is used to tie or bind in the bridging element (also referred to as pile yarn) in one of the first and second textile layer. This means that after the yarn has bridged the distance between one of the textile layers and the other of the textile layers, the yarn is bond in by one weft yarn inserted under the binding yarn, after which the binding yarn bridges again the distance between the other of the textile layers and the one of the textile layers. More preferred, a W-construction is used to tie in or bind in the bridging element (also referred to as pile yarn) in one of the first and second textile layer. This means that after the yarn has bridged the distance between one of the textile layers and the other of the textile layers, the yarn is bond in by three consecutive weft yarn (inserted in this order under, over, and again under the binding yarn), after which the binding yarn bridges again the distance between the other of the textile layers and the one of the textile layers.

Hence the first and second textile layer are woven layers, each layer comprising weft yarns and a warp yarns, some of these warp yarns may be used to bind in the weft yarns other may be used as flexible binding elements for binding the two textile layers to each other. The total number of weft yarns per length unit in warp direction may preferably range between 100 and 2000 yarns per meter, such as between 500 and 1500 yarns per meter, e.g. about 1000 yarns per meter. The total number of warp yarns per length unit in weft direction may preferably range between 100 and 2000 yarns per meter, such as between 500 and 1500 yarns per meter, e.g. about 1000 yarns per meter. Such weave density has as an advantage that again the heat exchanging element comprising the textile layers are flexible and drapable, while not being too heavy to handle.

Preferably the weft yarns are filament yarns, possibly mono- or multifilament yarns. The weft yarns may be multifilament yarns typically comprising more than 2 filaments per radial section such as 10 or more per radial section, e.g. 15 or more, or even 20 or more filaments per radial section. The multifilament yarns may be twisted single yarns, or twined (or plied) yarns, comprising 2, 3 or more single yarns being twisted (or plied) to each other. The use of such multifilament weft yarns has the advantage that it provides a double textile fabric with increased drapeability as compared to the double textile fabrics using monofilaments. The use of multifilament yarns also improves the strength of the double textile fabric as compared to the double textile fabric using spun yarns.

Preferably the warp yarns used to bind in the weft yarns only, may be multifilament or spun staple fiber yarns. The spun yarns may be twisted single yarns, or twined (or plied) yarns, comprising 2, 3 or more single yarns being twisted (or plied) to each other. The use of such warp yarns has the advantage that it provides a double textile fabric with increased drapeability as compared to the double textile fabrics using monofilaments. The use of multifilament yarns also improves the strength of the double textile fabric as compared to the double textile fabric using spun yarns.

Alternatively double textile fabric, hence the two textile layers and the flexible binding elements, are provided by a double knitted textile fabric, optionally a double warp knitted fabric. Also here two knitted fabrics are made on two mutually opposed knitting beds. The binding yarns, being the flexible binding elements, are tied in to one of the textile layers, after which the binding yarn bridges the distance between the two knitting beds. The binding yarn is tied in the second textile layer and bridges again to, or returns back to the first of the two knitting beds.

According to some embodiments, the number of flexible binding elements per surface area unit of the textile layers may be in the range of 500 to 60000 flexible binding elements per m².

The number of flexible binding elements per surface area unit of the textile layers is preferably in the range of 500 to 50000 binding element per m², e.g. from 1000 to 50000 binding element per m², e.g. from 7500 to 50000 binding element per m², such as in the range of 10000 to 30000 binding element per m². In case the textile layers are woven textile layers, the number of flexible binding elements per length unit in warp and weft direction may be identical or may differ one to the other. Preferably in warp direction, the number of flexible binding elements per length unit in warp direction may be in the range of 100 to 300 flexible binding elements per meter. Preferably in weft direction, the number of flexible binding elements per length unit in weft direction may be in the range of 50 to 200 flexible binding elements per meter.

According to some embodiments, the distance between the two textile layers of the double textile fabric may be in the range of 4 to 300 mm.

More preferred, the distance between the two textile layers of the double textile fabric is in the range of 10 to 150 mm, e.g. in the range of 50 to 125 mm. This distance is equal to the length of the binding elements between the two textile layers.

The provision of the flexible binding elements, and in particularly this number of flexible binding elements per surface area unit, cause the heat exchanging medium to flow between the textile layers quite turbulently. As such, it is believed that this causes the significantly more uniform heating of the surface of the outer sides of the uneven polymeric coatings comprising thermally conductive particles. The use of multifilament yarns to provide the flexible binding elements positively influences this effect.

It is understood that the heat exchanging element according to the present invention further may comprise other parts, such as connection elements to connect the heat exchanging element to tubing guiding the heat exchanging liquid, such as liquid, e.g. water, to and from the heat exchanging element. The outer edges of the double layered textile fabric are liquid-tight closed by appropriate closing, like a seal or alike. Alternatively, the two textile layers may be thermally welded onto the other to provide a closed edge to the heat exchanging element.

Though not limitative, the overall dimension of the heat exchanging element may in general range from 10 to 300 cm wide, e.g. 20 to 200 cm wide, in general range from 10 to 400 cm in height, such as 30 to 300 cm in height. The thickness of the heat exchanging element is defined by the thickness of the double layered textile fabric, the one or two liquid-tight coatings on the textile layers and optionally other parts being coupled to heat exchanging element.

The heat exchanging element according to the first aspect of the invention may have various different uses.

According to a second aspect of the present invention, the heat exchanging element is used as heating or cooling element.

The heat exchanging element may be used as radiator e.g. being part of a central heating system in houses, offices, hospitals, homes, military or other bases, or any other building.

The heat exchanging element may be used as water-air heat exchanger or oil-air heat exchanger.

The heat exchanging element may be used in medical applications such as cold or hot pack. In this application, preferably the second textile layer is coated with a thermally insulating material.

The heat exchanging element may be used in industrial applications, e.g. as cooling or heating element, such as being part of the cooling group of an air conditioner. The heat exchanging element may be used in automotive application for e.g. motor cooling, turbo cooling.

In general the heat exchanging element may be used as cooling elements, heating elements, cooling or heating pads, and alike.

### Brief Description of the Drawings

Fig. 1 schematically illustrates a cross section of a heat exchanging element according to the first aspect of the invention.
Fig. 2 schematically illustrates a detail of this heat exchanging element of figure 1.
Fig. 3 schematically illustrates a cross section of another heat exchanging element according to the first aspect of the invention.
Fig. 4 schematically illustrates a top view of a heat exchanging element according to the first aspect of the invention, used as a radiator.

In the different figures, the same reference signs refer to the same, analogue or similar features or elements.

### Detailed Description of Embodiment(s)

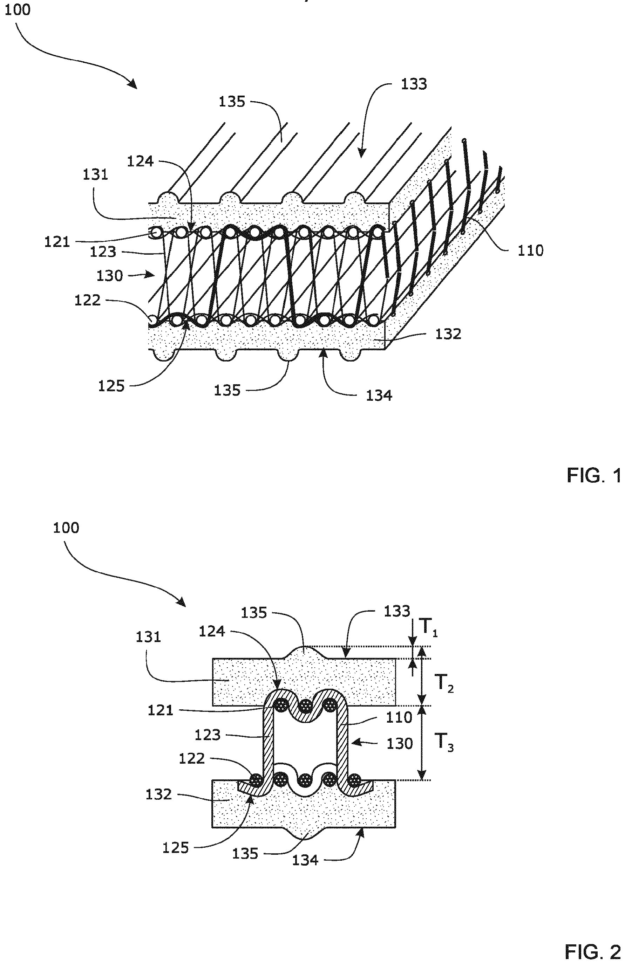

A heat exchanging element 100 according to the first aspect of the invention is shown in figure 1. A detail of the cross section of this heat exchanging element 100 is shown in figure 2. The heat exchanging element 100 comprises double textile fabric, being a double woven polyester fabric 110. The double woven polyester fabric has a first textile layer 121 and a second textile layer 122, The textile layers are connected at their inner side to each other by means of flexible binding elements 123. These flexible binding elements 123 create a space 130 between the textile layers 121 and 122. The outer side 124 of the first textile layer 121 is coated with a first liquid-tight polymeric coating 131, which coating 131 comprises thermally conductive particles.

An identical coating 132 is applied to the outer side 125 of the second textile layer 122. The composition of the coatings 131 and 132 is approximately 70%w of PVC and 30%w of aluminium-based particles available from Eckart Benelux BV (NL) as Ireflex 5000 white, having a substantially coin- or disk-like shape with an average diameter of about 50µm and a thickness of approximately 1µm. The coating layers 131 and 132 are applied by direct coating. The outer sides 133 and 134 of the first liquid-tight polymeric coating 131 respectively the second liquid-tight polymeric coating 132 are uneven, and having ribs 135 with a height T1 of 160µm. The number of ribs 135 per linear meter of the double woven polyester fabric 110 is chosen such that the specific surface per surface area unit of the outer sides 133 and 134 is about 1.4 m²/m². The thickness T2 of the coating layers 131 and 132 is about 600µm. The two textile layers 121 and 122 are connected at their inner side to each other by means of flexible binding elements 123. The number of flexible binding elements 123 per surface area unit of the textile layers 121 and 122 is in the range of 10000 to 30000 binding element per m². Both in warp and weft direction of the textile layers 121 and 122, the number of number of flexible binding elements per length unit in warp or weft direction may be chosen in the range of 100 to about 200 flexible binding elements per meter. The warp and weft yarns of the textile layers 121 and 122 are preferably PES multifilament yarns with a yarn number in the range of 50 to 500 dtex. Also the flexible binding elements 135 are multifilament yarns. The fineness of the yarns may preferably be in the range of 50 to 500 dtex. In comparison with the multifilament yarns of the first and second textile layer 121 and 122, the multifilament yarns of the flexible binding elements may have a lower twist rate, i.e. turns per linear meter of yarn. The distance T3 between the two textile layers 121 and 122 is about 60mm.

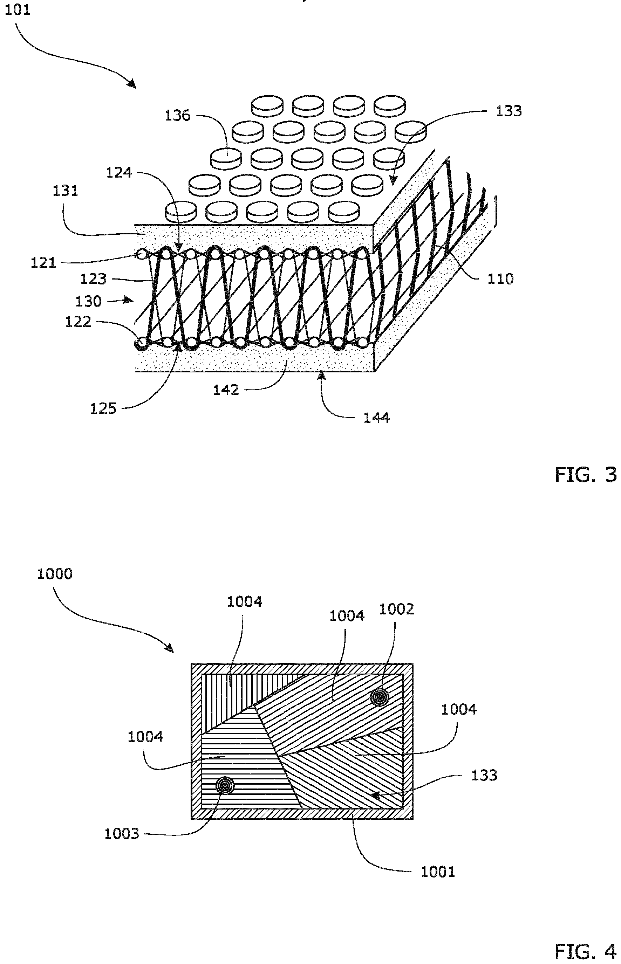

As a mere alternative heat exchanging element 101 is shown in figure 2. The same reference signs are referring to the same features as for the heat exchanging element 100 of figures 1 and 2. Instead of ribs 135 on the first liquid-tight polymeric coating 131, the first liquid-tight polymeric coating 131 is provided with cylindrical protrusions 136 to increase the specific surface per surface area unit of the outer side 133. The height is also about 160µm, and the diameter is in the range of 300 to 350µm. again, the number of protrusions 136 is chosen such that the specific surface per surface area unit of the outer side 133 is about 1.4 m²/m². Contrary to the heat exchanging element 100 of figures 1 and 2, the second liquid tight layer 132, in figure 3 being second liquid tight layer 142, is provided from pure PVC polymer, and has an even, substantially flat, outer side 144. This side of the heat exchanging element 101 is less thermally conductive and functions rather as an insulating side. The heat exchanging element 101 thus conducts its heat rather via the first liquid-tight polymeric coating 131.

As such a rather thin but efficient heating heat exchanging element 100 or 101 may be provided. By guiding a heat exchanging liquid, e.g. water, in the open space 130 between the watertight sides of the heat exchanging element 100 or 101. Heat from the heat exchanging liquid may be exchanged with the outer side or sides of the heat exchanging element 100 or 101. It is clear that other features may be provided to the heat exchanging elements 100 or 101 as shown in figure 4, where heat exchanging element 1000 may refer to a heat exchanging element 100 or 101. The heat exchanging element 1000 may be provided by a liquid tight edge 1001, where the two sides of the double textile fabric 110 are liquid tight connected one to the other. The heat exchanging element 1000 may be provided with a heat exchanging liquid inlet means 1002 and a heat exchanging liquid outlet meansn1003. Such means may be provided as a coupling, suitable to couple to tubing guiding heat exchanging liquid to and from the heat exchanging element 1000. As shown in figure 4, the outer side 133 may be provided with different zones 1004 where similar, different or analogue unevenness's are provided. By locally increasing or decreasing the specific surface per surface area unit of the outer sides 133, the heat exchanging properties may be varied zone 1004 per zone 1004 to some extent.

As a mere example, the heat exchanging element 1000 may be used as a radiator e.g. being part of a central heating system in a house, e.g. mounted in front of a curved wall. The length and width of the radiator may be e.g. 20 to 200 cm wide, and 30 to 300 cm in height.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above. In the context of this invention, given ranges are inclusive, unless otherwise indicated.

## Claims

1. A heat exchanging element comprising a first and a second textile layer, said textile layers being spaced one from the other, the outer side of the first textile layer being coated with a first liquid-tight polymeric coating, **characterised in that** said first liquid-tight polymeric coating comprises thermally conductive particles.

2. A heat exchanging element according to claim 1, wherein said textile layers are spaced at their inner side to each other by at least one spacing element creating the space between said textile layers.

3. A heat exchanging element according to claim 2, wherein said at least one spacing element is a rigid spacing element.

4. A heat exchanging element according to claim 2, wherein said at least one binding element is a flexible spacing element.

5. A heat exchanging element according to claim 1, wherein said textile layers are part of a double textile fabric, said textile layers are connected at their inner side to each other by flexible binding elements creating the space between said textile layers.

6. A heat exchanging element according to claim 5, wherein the binding elements are multifilament yarns or staple fiber spun yarns.

7. A heat exchanging element according to any one of the claims 5 to 6, wherein the number of binding elements per surface area unit of the textile layers is in the range of 500 to 60000 flexible binding elements per m².

8. A heat exchanging element according to any one of the claims 1 to 7, wherein the specific surface per surface area unit of the outer side of the first liquid-tight polymeric coating is more than 1 m²/m².

9. A heat exchanging element according to claim 8, wherein the specific surface per surface area unit of the outer side of the first liquid-tight polymeric coating is in the range of more than 1,01 m²/m²

10. A heat exchanging element according to any one of the claims 1 to 9, wherein the amount of thermally conductive particles in the first liquid-tight polymeric coating is in the range of 1%w to 40 %w of the coating.

11. A heat exchanging element according to any one of the claims 1 to 10, wherein the thermally conductive particles in the first liquid-tight polymeric coating are carbon particles, metal particles or a combination of carbon particles and metal particles.

12. A heat exchanging element according to any one of the claims 1 to 11, wherein the second textile layer is coated with a second liquid-tight polymeric coating, said second liquid-tight polymeric coating comprises thermally conductive particles.

13. A heat exchanging element according to any one of the claims 1 to 12, wherein the specific surface per surface area unit of the outer side of the second liquid-tight polymeric coating is more than 1 m²/m².

14. A heat exchanging element according to any one of the claims 1 to 13, wherein the distance between the two textile layers is in the range of 4 to 300 mm.

15. The use of a heat exchanging element according to any one of the claims 1 to 14 as heating or cooling element.
